# EUROPÄISCHE PATENTANMELDUNG

(11) **EP 4 250 575 A1**
(43) Veröffentlichungstag der Anmeldung: **27.09.2023**
(21) Anmeldenummer: 22164160.8
(22) Anmeldetag: 24.03.2022
(51) Int. Cl.: H04B 1/44, H04B 1/525

(54) **VORRICHTUNG UND VERFAHREN ZUR DATENÜBERTRAGUNG**

(71) Anmelder: Funkwerk Systems GmbH, 99625 Kölleda (DE)
(72) Erfinder: Porsch, Lutz, 99610 Sömmerda (DE); Stöpel, Uwe, 99625 Kölleda (DE); Voigt, Thomas, 99625 Kölleda (DE)
(74) Vertreter: Gleim Petri Patent- und Rechtsanwaltspartnerschaft mbB

(57) **Zusammenfassung**

Die Erfindung betrifft eine Vorrichtung zur Datenübertragung, die eine Antenne (2), ein Modem (1), einen Sensor (3), der eine Signalstärke der Funksignale bestimmt, einen Umschalter (4), der mit dem Sensor (3), dem Modem (1) und der Antenne (2) elektrisch verbunden ist, umfasst. Der Umschalter (4) ist umschaltbar zwischen einem Verstärkerzweig (5) mit einem Verstärker (6) und einem Empfangszweig (7). Dies geschieht durch den Vergleich der Signalstärke der Funksignale mit einem vorgegebenen Schwellwert, der ein empfangenes von einem gesendeten Funksignal abgrenzt. Der Umschalter (4) ist auf den Verstärkerzweig (5) geschaltet, wenn die Signalstärke den Schwellwert übersteigt. Ferner ist der Umschalter (4) auf den Empfangszweig (7) geschaltet, wenn die Signalstärke den Schwellwert unterschreitet. Um die Sendeleistung von Funksignalen zu erhöhen, ohne den Empfang zu stören, gibt der Empfangszweig (7) das Funksignal als ein Empfangssignal an das Modem (1) weiter und der Verstärkerzweig (5) das Funksignal als ein Sendesignal an die Antenne (2).

## Beschreibung

Die Erfindung betrifft eine Vorrichtung zur Datenübertragung, die eine Antenne, die Funksignale empfängt und sendet, ein Modem, welches mit der Antenne verbunden ist und die Funksignale verarbeitet, einen Sensor, der zwischen der Antenne und das Modem geschaltet ist und die Signalstärke der Funksignale bestimmt, sowie einen Umschalter, der mit dem Sensor, dem Modem und der Antenne elektrisch verbunden ist, umfasst. Der Umschalter ist umschaltbar zwischen einem Verstärkerzweig mit einem Verstärker und einem Empfangszweig. Dies geschieht durch den Vergleich der Signalstärke der Funksignale mit einem vorgegebenen Schwellwert, der ein empfangenes von einem gesendeten Funksignal abgrenzt. Der Umschalter wird auf den Verstärkerzweig geschaltet, wenn die Signalstärke den Schwellwert übersteigt. Ferner wird der Umschalter auf den Empfangszweig geschaltet, wenn die Signalstärke den Schwellwert unterschreitet. Die Funktion des Umschalters kann separat ein- und ausgeschaltet werden.

Ferner betrifft die Erfindung ein Verfahren zur Datenübertragung zur Datenübertragung, bei dem ein Funksignal in Form eines Empfangssignals von einer Antenne empfangen oder in Form eines Sendesignals von einem Modem ausgegeben und dieses Funksignal analysiert wird, ob es einen vorgegebenen Schwellwert, der das Empfangssignal von dem Sendesignal abgrenzt, über- oder unterschreitet, bevor es weitergegeben wird.

Datenstandards für die Übertragung von Funksignalen in der Nachrichtentechnik werden regelmäßig von neueren Datenstandards abgelöst. Dabei werden Systeme mit einer oder mehrerer Antennen verwendet. Insbesondere bei der Nutzung von nur einer Antenne muss zwischen Sende- und Empfangsmodus umgeschaltet werden. Dabei werden verschiedene Übertragungsverfahren verwendet, so zum Beispiel Zeitduplex (***t**ime **d**ivision **d**uplex,* tdd), Zeitmultiplex (***t**ime **d**ivision **m**ultiple **a**ccess*, TDMA), Frequenzduplex (***f**requency **d**ivision **d**uplex*, fdd) oder auch eine Kombination dieser. Bei ersteren wechseln sich Sende- und Empfangssignale in einem festen zeitlichen Abstand ab, während bei letzterem unterschiedliche Frequenzen für Sende- und Empfangssignale verwendet werden. Unabhängig vom Verfahren kann eine Antenne lediglich entweder in einem Empfangs- oder einem Sendemodus sein.

Aus der DE 10 2004 026 195 A1 sind eine Vorrichtung und ein Verfahren bekannt, den Empfang derartiger Signale zu verbessern, indem ein von einer Antenne empfangenes Funksignal selektiv verstärkt wird. Dazu wird das Funksignal sowohl über einen Verstärkerzweig als auch einen Passivzweig geleitet und die Signalstärke beider Zweige über einen Komparator verglichen. Es ist ferner ein Umschalter vorgesehen, der entweder das verstärkte oder das nicht verstärkte Funksignal an ein Endgerät in Abhängigkeit des Pegels des Funksignals weitergibt.

Endgeräte für die Nachrichtentechnik, wie zum Beispiel Modems, weisen meist eine Sendeleistung auf, welche für besondere Anwendungen, zum Beispiel bei Gleisanlagen, nicht ausreichend sein können.

Es ist daher Aufgabe der Erfindung eine Möglichkeit für ein einzelnes Modem aufzuzeigen, die Sendeleistung von Funksignalen zu erhöhen, ohne den Empfang zu stören.

Diese Aufgabe wird für die eingangs beschriebene Vorrichtung dadurch gelöst, dass der Empfangszweig das Funksignal als ein Empfangssignal an das Modem weitergibt und der Verstärkerzweig das Funksignal als ein Sendesignal an die Antenne weitergibt. Der Schwellwert für eine Signalstärke, die das Sendesignal von dem Empfangssignal abgrenzt kann sehr gut festgelegt werden, da die beiden Signale einen sehr großen Pegelunterschied aufweisen, was eine selektive Verstärkung des Sendesignals ermöglicht. Ein solches System lässt sich unabhängig von Übertragungsstandard und Endgerät einsetzen und vor allem unabhängig von dem abgedeckten Frequenzbereich.

In einer vorteilhaften Ausgestaltung ist der Sensor ein Feldstärkedetektor. Ein solcher ist zuverlässig, robust und schnell genug, um in Kombination ein Schaltsignal an den Umschalter zu übergeben, ohne den Betrieb der Anlage zu verschlechtern.

Die erfindungsgemäße Vorrichtung ist besonders für ein 4G- und/oder 5G-Modem geeignet. Dies ist vorteilhaft, weil gerade solche Modems in der Regel ein maximales Sendesignal mit 23 dBm generieren. Dieses ist jedoch in Anwendungsfeldern wie dem Zugfunk nicht ausreichend. Gerade bei diesem Anwendungsfeld ist es von Vorteil, wenn der Verstärker das Sendesignal mit 23 dBm um mindestens 3 dB anhebt, bei einem Sendesignal mit 23 dBm Signalstärke vorzugsweise auf 31 dBm.

In einer weiteren vorteilhaften Ausgestaltung sind der Umschalter, der Sensor und der Verstärkerzweig mittels einer Steuereinheit zuschaltbar und abschaltbar, so dass auch die gesendeten Funksignale in einem abgeschalteten Zustand des Umschalters, des Sensors und des Verstärkerzweigs über den Empfangszweig an die Antenne geleitet werden. Die Verstärkung ist nicht für alle Anwendungen notwendig, so dass ein Zu- oder Abschalten sinnvoll ist. Dies gilt für Bereiche, bei denen einzelne Kommunikationsgeräte räumlich dicht beieinanderliegen. Alternativ kann auch in Abhängigkeit von der Feldstärke des zuletzt empfangenen oder erwarteten Empfangssignals die Verstärkung des Sendesignals aktiviert werden. Ist der Empfänger so nah, dass die Sendeleistung ohne Verstärker des Modems ausreicht, kann auf die Verstärkung verzichtet werden. Ist der aktuelle Empfänger jedoch weiter entfernt, wird der Verstärkerzweig zugeschaltet und so der entfernungsbedingte Verlust an Signalstärke kompensiert.

Es ist ferner von Vorteil, wenn die Antenne zwischen zwei Antennenwegen umschaltbar ist, so dass sie wahlweise mit dem Empfangszweig oder dem Verstärkerzweig verbunden werden kann und die Antenne mit dem Empfangszweig verbunden ist, wenn die Signalstärke des Funksignals den Schwellwert unterschreitet, und mit dem Verstärkerzweig, wenn die Signalstärke des Funksignals den Schwellwert überschreitet. Auf diese Weise kann eine einzelne Antenne, welche sowohl Funksignale sendet als auch empfängt, integriert werden.

Bei einer weiteren vorteilhaften Ausgestaltung weist der Empfangszweig einen weiteren Verstärker auf. Indem ein zuschaltbarer Alternativzweig vorhanden ist, der den Verstärker des Verstärkerzweigs oder den weiteren Verstärker des Empfangszweigs überbrückt und sowohl Sendesignale als auch Empfangssignale zwischen Antenne und Umschalter weitergeben kann, wird ermöglicht, den Empfangszweig zu spezialisieren und den Empfang zu verbessern, ohne die Möglichkeit zu beeinträchtigen, den Verstärkerzweig über die Steuereinheit abschalten zu können.

Die Aufgabe wird ferner durch das eingangs beschriebene Verfahren gelöst, indem das Funksignal derart weitergegeben wird, dass es verstärkt an die Antenne gegeben wird, wenn die Signalstärke des Funksignals über dem Schwellwert liegt, so dass ein Sendesignal angezeigt wird, oder eine Weitergabe des Funksignals an das Modem erfolgt, wenn die Signalstärke des Funksignals unter dem Schwellwert liegt, so dass das Empfangssignal angezeigt wird. Auf diese Weise wird das Funksignal selektiv verstärkt, wenn es sich um ein Sendesignal handelt. Je nach Anwendungsfall beträgt die Verstärkung vorteilhaft mindestens 3 dB.

Bei dem Verfahren ist es vorteilhaft, wenn die Analyse, ob ein von der Antenne aufgenommenen Funksignal oder von dem Modem ausgegebenen Funksignal vorliegt, derart erfolgt, dass die Signalstärke eines Funksignals mittels des Sensors gemessen wird, und die Signalstärke mit dem Schwellwert verglichen wird, der dazu geeignet ist, zwischen dem Empfangssignal und dem Sendesignal zu unterscheiden. Auf diese Weise lässt sich die Art des Funksignals besonders zuverlässig und mit wenig Latenz bestimmen.

Für das Verfahren ist es ferner von Vorteil, wenn die Antenne mit einem Verstärkerzweig verbunden wird, wenn die Signalstärke des Funksignals über dem Schwellwert liegt, so dass ein Sendesignal angezeigt wird, und die Antenne mit einem Empfangszweig verbunden wird, wenn die Signalstärke des Funksignals unter dem Schwellwert liegt, so dass ein Empfangssignal angezeigt wird. Auf diese Weise kann eine einzelne Antenne, welche sowohl Funksignale sendet als auch empfängt, integriert werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand eines Ausführungsbeispiels unter Bezugnahme auf die beigefügte Zeichnung, die ebenfalls erfindungswesentliche Merkmale offenbart, noch näher erläutert. Dieses Ausführungsbeispiel dient lediglich der Veranschaulichung und ist nicht als einschränkend auszulegen. Beispielsweise ist eine Beschreibung des Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Es zeigen:
- Fig. 1: ein Blockschaltbild einer Vorrichtung zur Datenübertragung und
- Fig. 2: ein Blockschaltbild einer alternativen Vorrichtung zur Datenübertragung.

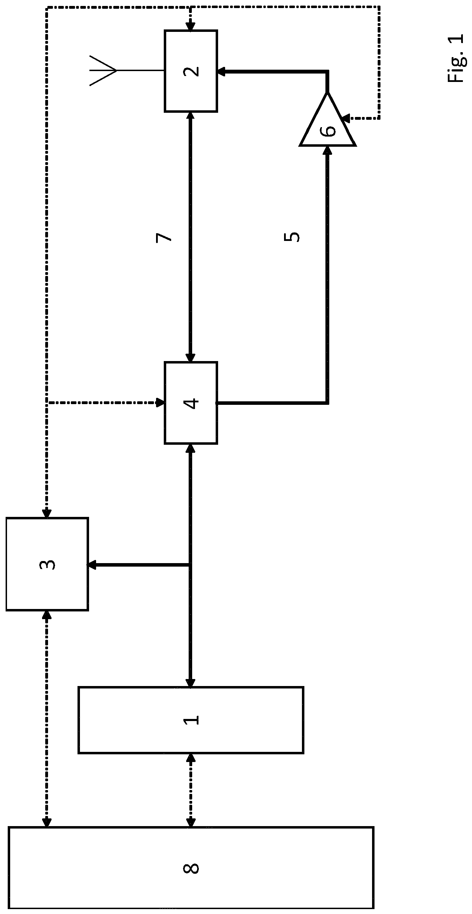

Fig. 1 zeigt das Blockschaltbild einer Vorrichtung zur Datenübertragung, welche ein Modem 1, zum Beispiel für den Standard 4G oder 5G, und eine Antenne 2 umfasst, die elektrisch miteinander verbunden sind. An Stelle der elektrischen Verbindung sind in Fig. 1 die Datenströme gezeigt. Funksignale, die die Antenne 2 sendet und empfängt und anschließend von dem Modem 1 verarbeitet werden, sind als Pfeile mit durchgängigen Linien gezeichnet, wobei die Pfeilrichtung die mögliche Richtung des Datenstroms angibt. Zwischen dem Modem 1 und der Antenne 2 sind ein Sensor 3 und ein Umschalter 4 geschaltet, letzterer ist mit den drei anderen Elementen elektrisch verbunden. Der Sensor 3 bestimmt eine Signalstärke der Funksignale, welche zwischen Modem 1 und Umschalter 4 abgegriffen werden. Dem Fachmann sind verschiedene Möglichkeiten bekannt, einen solchen Sensor 3 zu integrieren. In diesem Ausführungsbeispiel ist der Sensor 3 ein Feldstärkedetektor. Der Umschalter 4 ist umschaltbar zwischen einem Verstärkerzweig 5 mit einem Verstärker 6 und einem Empfangszweig 7.

Dies geschieht, indem die vom Sensor 3 gemessene Signalstärke mit Hilfe einer Software, bevorzugt mit einer Logikschaltung mit einem vorgegebenen Schwellwert verglichen wird, der ein empfangenes von einem gesendeten Funksignal abgrenzt bzw. dazu geeignet ist, diese voneinander zu unterscheiden. Der Schwellwert kann in Abhängigkeit vom Funkstandard frei festgelegt werden und wird an das verwendete Modem 1 und die zu erwartende Signalstärke angepasst. Ein Empfangssignal, welches von der Antenne 2 aufgenommen und an das Modem 1 übergeben wird, oder ein Sendesignal, welches vom Modem 1 an die Antenne 2 gesendet wird, können auf diese Weise gut durch den Sensor 3 voneinander unterschieden werden. Der Umschalter 4 wird auf den Verstärkerzweig 5 geschaltet, wenn die Signalstärke den Schwellwert überschreitet, und wird ansonsten auf den Empfangszweig 7 geschaltet, wenn die Signalstärke den Schwellwert unterschreitet. Auf diese Weise wird das Empfangssignal über den Empfangszweig 7 an das Modem 1 und das Sendesignal über den Verstärkerzweig 5 an die Antenne 2 weitergegeben.

Die typischerweise von dem Modem 1, vor allem nach 4G- oder 5G-Standard ausgegebenen Sendesignale weisen eine Signalstärke von 23 dBm auf und der Verstärkerzweig 5 erhöht die Signalstärke durch den Verstärker 6 um wenigstens 3 dB. Besonders günstig ist bei einer ursprünglichen Signalstärke von 23 dBm ein Anheben der Signalstärke auf 31dBm, da auf diese Weise die Vorrichtung bei Anwendungen, bei denen die Sende- und Empfangsgeräte weite Distanzen auseinanderliegen, zum Beispiel beim Zugfunk, verwendet werden kann.

Der Empfangszweig 7 ist dahingehend ausgestaltet, dass er ein von der Antenne 2 empfangenes Empfangssignal an das Modem 1 weitergeben kann. Im vorliegenden Ausführungsbeispiel wird das Empfangssignal unverändert weitergegeben, so dass der Empfangszweig 7 passiv ist.

Die in Fig. 1 schematisch gezeigte Vorrichtung weist ferner eine Steuereinheit 8 auf, die neben der Steuerung des Modems 1 erlaubt, den Umschalter 4 und den Sensor 3 zu deaktivieren und auf diese Weise einen bedarfsangepassten Betrieb der Vorrichtung ermöglicht. Dazu ist die Steuereinheit 8 elektrisch mit dem Sensor 3 und dem Modem 1 verbunden, was durch die gestrichelten Pfeile dargestellt ist. Auch andere Parameter wie die Verstärkung des Verstärkers 6, die Empfindlichkeit des Sensors 3 oder der Schwellwert können mittels der Steuereinheit 8 angepasst werden. Die Datenübertragung von Steuersignalen geht im Ausführungsbeispiel von dem Sensor 3 aus, es ist aber auch eine direkte Ansteuerung des Umschalters 4, des Verstärkers 6 oder der Antenne 2 problemlos möglich. Bei der Steuereinheit 8 kann es sich um ein speziell für die Vorrichtung angepasstes Steuergerät handeln, oder aber um eine Applikation auf einem Mobiltelefon. Wird das Umschalten zwischen dem Empfangszweig 7 und dem Verstärkerzweig 5 durch die Steuereinheit 8 deaktiviert, so können die Funksignale über den hier passiven Empfangszweig 7 geleitet werden.

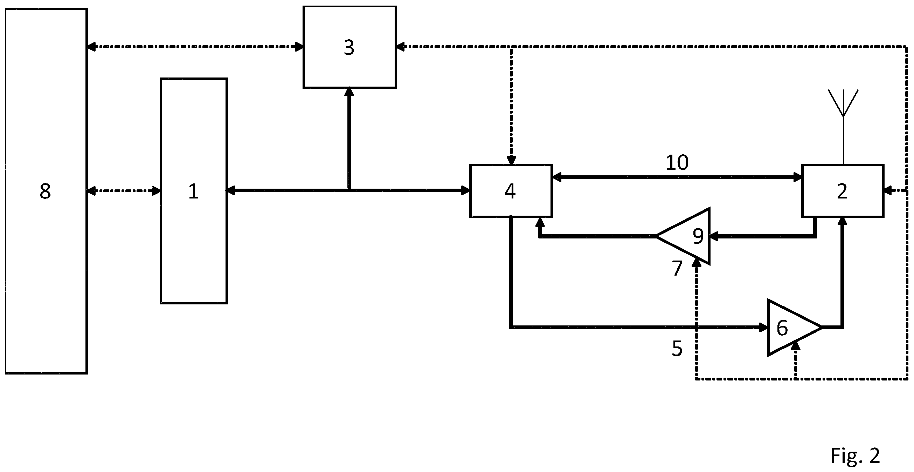

Es ist jedoch auch möglich, den Empfangszweig 7 zusätzlich mit Filtern, Verstärkern oder ähnlichem zu versehen, die für den Empfang von Funksignalen vorteilhaft sind. Dies ist in Fig. 2 dargestellt, wobei in den Empfangszweig 7 ein weiterer Verstärker 9, z.B. ein rauscharmer Verstärker (***l**ow **n**oise **a**mplifier*, LNA), der ebenfalls über die Steuereinheit 8 angesteuert werden kann, eingefügt ist. Auf diese Weise ist der Empfangszweig 7 jedoch nicht mehr für das Übertragen von Sendesignalen geeignet. Um ein Abschalten der Verstärkung über den Verstärkerzeig 5 dennoch zu ermöglichen, muss ein weiterer Alternativzweig 10 eingefügt werden, der entweder passiv oder sowohl zum Senden als auch zum Empfangen von Funksignalen geeignet ist. Dieser Alternativzweig kann entweder direkt den Umschalter 4 mit der Antenne 2 verbinden oder aber einen der beiden Verstärker 6, 9 überbrücken, sodass entweder der Verstärkerzweig 5 oder der Empfangszweig 7 in entweder einen Zweig ohne aktive Bauelemente oder einen anderweitigen, sowohl zum Empfang als auch zum Senden geeignete Zweig umgeschaltet werden. Hier kann entweder ein Umschalten sowohl von Umschalter 4 als auch auf einen weiteren Antennenweg an der Antenne 2 erfolgen, oder es wird ein weiteres, hier nicht gezeigtes Relay verwendet, welches nur ein Überbrücken der Verstärker 6, 9 ermöglicht.

### Bezugszeichenliste

- 1: Modem
- 2: Antenne
- 3: Sensor
- 4: Umschalter
- 5: Verstärkerzweig
- 6: Verstärker
- 7: Empfangszweig
- 8: Steuereinheit
- 9: weiterer Verstärker
- 10: Alternativzweig

## Patentansprüche

1. Vorrichtung zur Datenübertragung, umfassend
- eine Antenne (2), die Funksignale empfängt und sendet,
- ein Modem (1), welches mit der Antenne (2) verbunden ist und die Funksignale verarbeitet,
- einen Sensor (3), der zwischen die Antenne (2) und das Modem (1) geschaltet ist und eine Signalstärke der Funksignale bestimmt,
- ein Umschalter (4), der mit dem Sensor (3), dem Modem (1) und der Antenne (2) elektrisch verbunden ist, und der zwischen einem Verstärkerzweig (5) mit einem Verstärker (6) und einem Empfangszweig (7) durch den Vergleich der Signalstärke mit einem vorgegebenen Schwellwert, der ein empfangenes von einem gesendeten Funksignal abgrenzt, umschaltbar ist,
- der Umschalter (4) auf den Verstärkerzweig (5) geschaltet ist, wenn die Signalstärke den Schwellwert übersteigt, und
- der Umschalter (4) auf den Empfangszweig (7) geschaltet ist, wenn die Signalstärke den Schwellwert unterschreitet, **dadurch gekennzeichnet, dass**
- der Empfangszweig (7) das Funksignal als ein Empfangssignal an das Modem (1) weitergibt und
- der Verstärkerzweig (5) das Funksignal als ein Sendesignal an die Antenne (2) weitergibt.

2. Vorrichtung nach Anspruch 1, **dadurch gekennzeichnet, dass**
- der Sensor (3) als Feldstärkedetektor ausgebildet ist.

3. Vorrichtung nach Anspruch 1 oder 2, **dadurch gekennzeichnet, dass**
- das Modem (1) ein 4G- und/oder 5G-Modem ist.

4. Vorrichtung nach einem der Ansprüche 1 oder 3, **dadurch gekennzeichnet, dass**
- der Verstärker (6) das Funksignal um mindestens 3 dB, insbesondere auf 31 dBm, anhebt.

5. Vorrichtung nach einem der Ansprüche 1 bis 4, **dadurch gekennzeichnet, dass**
- der Umschalter (4), der Sensor (3) und der Verstärkerzweig (5) mittels einer Steuereinheit (8) zuschaltbar und abschaltbar sind, so dass auch die gesendeten Funksignale in einem abgeschalteten Zustand des Umschalters (4), des Sensors (3) und des Verstärkerzweigs (5) über den Empfangszweig (7) an die Antenne (2) geleitet werden.

6. Vorrichtung nach einem der Ansprüche 1 bis 5, **dadurch gekennzeichnet, dass**
- die Antenne (2) zwischen zwei Antennenwegen umschaltbar ist, so dass sie wahlweise mit dem Empfangszweig (7) oder dem Verstärkerzweig (5) verbunden ist und
- die Antenne (2) mit dem Empfangszweig (7) verbunden ist, wenn die Signalstärke des Funksignals den Schwellwert unterschreitet und
- die Antenne (2) mit dem Verstärkerzweig (5) verbunden ist, wenn die Signalstärke des Funksignals den Schwellwert überschreitet.

7. Vorrichtung nach einem der Ansprüche 1 bis 6, **dadurch gekennzeichnet, dass**
- der Empfangszweig (7) einen weiteren Verstärker (9) aufweist und ein zuschaltbarer Alternativzweig (10) vorhanden ist, der den Verstärker (6) oder den weiteren Verstärker (9) überbrückt und sowohl Sendesignale als auch Empfangssignale zwischen Antenne und Umschalter weitergeben kann.

8. Verfahren zur Datenübertragung, bei dem
- ein Funksignal in Form eines Empfangssignals von einer Antenne (2) empfangen oder in Form eines Sendesignals von einem Modem (1) ausgegeben wird,
- das Funksignal analysiert wird, ob die Signalstärke des Funksignals einen vorgegebenen Schwellwert, der das Empfangssignal von dem Sendesignal abgrenzt, über- oder unterschreitet, und
- das Funksignal verstärkt an die Antenne (2) gegeben wird, wenn die Signalstärke des Funksignals über dem Schwellwert liegt, so dass ein Sendesignal angezeigt wird, oder
- eine Weitergabe des Funksignals an das Modem (1) erfolgt, wenn die Signalstärke des Funksignals unter dem Schwellwert liegt, so dass das Empfangssignal angezeigt wird.

9. Verfahren nach Anspruch 7, wobei die Analyse, ob ein von der Antenne (2) aufgenommenen Funksignal oder von dem Modem (1) ausgegebenen Funksignal vorliegt, derart erfolgt, dass
- die Signalstärke eines elektrischen Funksignals mittels des Sensors (3) gemessen wird, und
- die Signalstärke mit dem Schwellwert verglichen wird.

10. Verfahren nach Anspruch 7 oder 8, wobei
- das Sendesignal mindestens um 3 dB, insbesondere auf 31 dBm, verstärkt wird.

11. Verfahren nach einem der Ansprüche 7 bis 9, wobei
- die Antenne (2) mit einem Verstärkerzweig (5) verbunden wird, wenn die Signalstärke des Funksignals über dem Schwellwert liegt, so dass ein Sendesignal angezeigt wird,
- und die Antenne (2) mit einem Empfangszweig (7) verbunden wird, wenn die Signalstärke des Funksignals unter dem Schwellwert liegt, so dass ein Empfangssignal angezeigt wird.
